# EUROPÄISCHE PATENTSCHRIFT

(11) **EP 2 497 807 B1**
(45) Veröffentlichungstag und Bekanntmachung des Hinweises auf die Patenterteilung: **03.04.2019**
(21) Anmeldenummer: 12156439.7
(22) Anmeldetag: 22.02.2012
(51) Int. Cl.: C09J 7/21, C09J 7/38, D04B 21/14, H02G 3/04, H02G 3/30

(54) **VERWENDUNG EINES KLEBEBANDES FÜR DIE KABELBANDAGIERUNG**
USE OF AN ADHESIVE TAPE FOR BUNDLING CABLES
UTILISATION D'UN RUBAN ADHÉSIF POUR LE BANDAGE DE CÂBLES

(30) Priorität: 07.03.2011 DE 102011005162
(43) Veröffentlichungstag der Anmeldung: 12.09.2012
(73) Patentinhaber: tesa SE, 22848 Norderstedt (DE)
(72) Erfinder: Siebert, Dr. Michael, 22869 Schenefeld (DE); Wahlers-Schmidlin, Andreas, 21720 Guderhandviertel (DE)

(56) Entgegenhaltungen:
- EP-A1- 2 196 399
- EP-A2- 2 157 147
- WO-A1-02/18509
- WO-A1-2006/108871
- DE-A1-102008 056 554

## Beschreibung

Die Erfindung betrifft die Verwendung eines Klebebands zum Umhüllen von langgestrecktem Gut wie insbesondere Leitungen oder Kabelsätze mit einem Träger und mit einer zumindest auf einer Seite des Trägers aufgebrachten vorzugsweise druckempfindlichen Klebebeschichtung.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich eine Schutzfunktion zu erzielen. Mit Folienklebebändern wird ein gewisser Schutz vor Flüssigkeitszutritt erreicht, mit Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Zur Verbesserung der Dämpfung und Erhöhung der Abriebfestigkeit sind Klebebänder bekannt, deren Träger aus mehreren Schichten bestehen.

Mit der EP 1 723 210 A1 ist ein hoch abriebfestes und geräuschdämpfendes Band für die Bandagierung von Kabelbäumen bekannt geworden, das aus einem Träger mit einer ersten Deckschicht A, die mit einer zweiten Schicht C über die gesamte Fläche der Deckschicht A fest verbunden ist, besteht.

Die Deckschicht A kann Velours, Gelege, Gewebe oder Gewirke sein, die Schicht C ein poröses Flächengebilde wie ein Textil mit einer offenen, aber stabilen dreidimensionalen Struktur, wie ein Schaumstoff oder wie eine geschäumte Folie.

Beide Deckschichten weisen die gleiche Breite auf und sind dabei jeweils über deren gesamte Fläche mittels einer weiteren Klebstoffschicht ohne Versatz miteinander verbunden, so dass deren Seitenkanten bündig abschließen.

So beschreibt die EP 1 911 824 A1 ein Kabelwickelband mit einem bandförmigen, als Verbund aus einem Gewebe und aus einem Vlies ausgebildeten Träger, der zumindest einseitig vollflächig mit einer selbstklebenden Haftklebeschicht ausgerüstet ist. Das Gewebe weist mindestens 20 Kettfäden je cm und höchstens 22 Schussfäden je cm auf. Beide textile Lagen weisen auch hier die gleiche Breite auf und sind dabei jeweils über deren gesamte Fläche mittels einer weiteren Klebstoffschicht ohne Versatz miteinander verbunden, so dass deren Seitenkanten bündig abschließen.

Aufgrund der Zweilagigkeit ist das Klebeband in der Lage, sowohl an einem Dorn mit 5 mm Durchmesser als auch an einem Dorn mit 10 mm Durchmesser die Abriebklasse E gemäß LV 312 zu erfüllen.

Einen Kabelbaum umschließt das Klebeband in einer schraubenlinienförmigen Wicklung.

Aus den zwei vollflächig laminierten Materialien, wie sie in der EP 1 723 210 A1 und der EP 1 911 824 A1 beschrieben sind, ergibt sich allerdings eine höhere Steifigkeit, die sich bei Spiralwicklung nachteilig auswirkt und die insbesondere zum Flagging an den Bandenden führt.

Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.

Durch die vollflächige Ausrüstung des Trägers mit einer Klebebeschichtung kann ein Kontakt der Klebmasse mit der Kabelummantelung nicht vermieden werden.

Dies führt zu einer hohen Steifigkeit des Kabelbaums, da das Band an jeder Stelle durch die Klebmasse mit dem Kabelbaum verbunden ist.

Beim schraubenlinienförmigen Ummanteln eines Kabelbaums mit dem Klebeband überlappen sich die einzelnen Wicklungen, so dass an diesen Stellen vier textile Lagen übereinander liegen, was ebenfalls zu einem sehr steifen Kabelbaum führt. Allein aufgrund der Dicke des resultierenden Kabelbaums ist bei den engen Einbauverhältnissen, die heute im Automobilbau vorherrschen, die Gefahr nicht auszuschließen, dass das Klebeband an scharfen Kanten verletzt wird, so dass die Kabelbündelung aufgerissen wird.

Die EP 2 034 576 A1 beschreibt ein Klebeband aus einem Träger und einer darauf aufgebrachten Klebemasse, das eine weitgehend klebfreie Innenfläche aufweist, indem auf die Klebeschicht ein zweiter Träger auflaminiert ist, der eine geringere Breite aufweist als die Breite des ersten Trägers.

Es sind verschiedene Ausführungsformen vorgesehen. So kann der zweite Träger an einer Seitenkante bündig mit einer Seitenkante des ersten Trägers verlaufen, wobei der erste Träger mit der Klebeschicht gegenüber der anderen Seitenkante des zweiten Trägers übersteht. Der erste Träger kann mit der Klebeschicht auch beidseitig gegenüber den Seitenkanten des zweiten Trägers überstehen oder es kann vorgesehen sein, dass der erste Träger mit der Klebeschicht einseitig gegenüber einer Seitenkante des zweiten Trägers übersteht und der zweite Träger auf der anderen Seite des ersten Trägers einseitig gegenüber einer Seitenkante des ersten Trägers übersteht. Des Weiteren ist es auch möglich, das der zweite Träger mindestens aus zwei voneinander getrennten Trägerteilen besteht, wobei das erste Trägerteil eine erste Breite und das zweite Trägerteil eine zweite Breite aufweist, wobei die Summe der Breiten der Trägerteile kleiner ist als die Breite des ersten Trägers.

Die Umwicklung eines Kabelbaums mit dem beschriebenen Klebeband erfolgt dabei nicht - wie üblich - schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Im Folgenden wird diese Art der Wicklung "Einschlagen des Kabelbaums" genannt.

Würde schraubenlinienförmig eingesetzt, besteht die Möglichkeit, dass die Klebmasse mit der Kabelummantelung in Kontakt kommt, was wieder zu den oben geschilderten Nachteilen führt.

Des Weiteren sind Klebebänder bekannt, beispielsweise aus der EP 1 315 781 B1 oder der DE 20 52 271 A1, bei denen die Klebemasse in Längsrichtung in Form eines Streifens aufgebracht ist, der eine geringere Breite aufweist als das Trägermaterial des Klebebands.

Beim Ummanteln eines Kabelbaums in einer schraubenlinienförmigen Bewegung wird erreicht, dass der Streifen der Klebemasse vollständig auf dem Klebeband der darunter liegenden Wicklung verklebt. Allerdings ist der so genannte Streifenstrich technisch und wirtschaftlich aufwändig in der Herstellung.

Des Weiteren wird in der EP 1 315 781 B1 ein Klebeband gezeigt, das dadurch entsteht, dass die Klebemasseseiten zweier einseitig vollflächig beschichteter Klebebänder mit Versatz aufeinander laminiert werden.

Aus der DE 10 2008 056 554 A1 ist eine Ummantelung bekannt, die in axialer Richtung das zu umhüllende Gut einschlägt.

Aus der EP 2 157 147 A2 sind unterschiedliche Klebebänder zur Kabelbandagierung bekannt. In Abschnitt [0052] werden Klebebänder offenbart, die in einer Schraubenlinie um ein langgestrecktes Gut geführt werden.

In den Abschnitten [0069] bis [0076] hingegen werden Produkte beschrieben, die das Gut axial ummanteln, also nicht schraubenlinienförmig verwandt werden. In der Figur 5 ist das Produkt gezeigt, in den Figuren 6, 7 und 8 ist dargestellt, wie dieses Produkt eingesetzt wird.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification). Im Folgenden werden diese Normen verkürzt mit LV 312 beziehungsweise mit Ford-Spezifikation bezeichnet.

Die Geräuschdämpfung eines Klebebandes wird anhand eines definierten Prüfaufbaus und Prüfverfahrens bestimmt. Die Klassifizierung der Klebebänder erfolgt dann wie nachstehend in Tabelle 1 wiedergegeben:

**Tabelle 1: Klassifizierung Geräuschdämpfung nach LV 312-1 (10/2009)**

| **Geräuschdämpfungsklasse** | **Anforderung** |
|---|---|
| A keine Geräuschdämpfung | 0 bis ≤ 2 dB(A) |
| B geringe Geräuschdämpfung | > 2 bis ≤ 5 dB(A) |
| C mittlere Geräuschdämpfung | > 5 bis ≤ 10 dB(A) |
| D hohe Geräuschdämpfung | > 10 bis ≤ 15 dB(A) |
| E sehr hohe Geräuschdämpfung | > 15 dB(A) |

Die Abriebbeständigkeit eines Klebebandes wird nach LV 312-1 ebenfalls anhand eines definierten Prüfverfahrens bestimmt. Die Klassifizierung der Klebebänder hinsichtlich ihrer Abriebbeständigkeit bei einem Dorndurchmesser von 5 mm ist in Tabelle 2 wiedergegeben:

**Tabelle 2: Klassifizierung Abriebbeständigkeit nach LV 312-1 (10/2009)**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 -14999 Hübe |
| F extrem hoher Abriebschutz | ≥ 15000 Hübe |

Der Prüfling mit einer Länge von 10 cm wird auf einen 5 oder 10 mm dicken Stahldorn einlagig in Längsrichtung aufgeklebt. Als Abriebwerkzeug dient ein Stahldraht mit 0,45 mm Durchmesser, der unter einer Gewichtsbelastung von 7 N mittig über den Prüfling reibt. Als Maßzahl für die Abriebeigenschaften wird die Anzahl der Doppelhübe bestimmt, bis der Prüfling zerstört ist. Bei sehr hohen Abriebfestigkeiten hat es sich bewährt, das Klebeband auch auf einem Metalldorn mit 5 mm Durchmesser zu messen. Dadurch kann auch eine Abriebfestigkeit gegenüber schärferen Gegenständen wie zum Beispiel einer Metallkante simuliert werden.

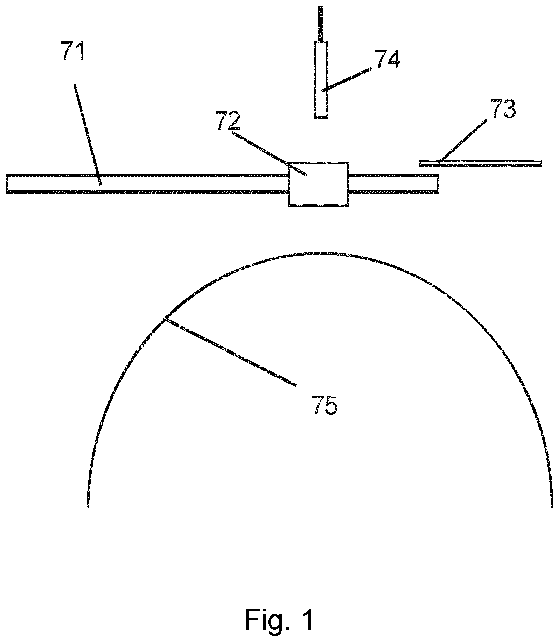

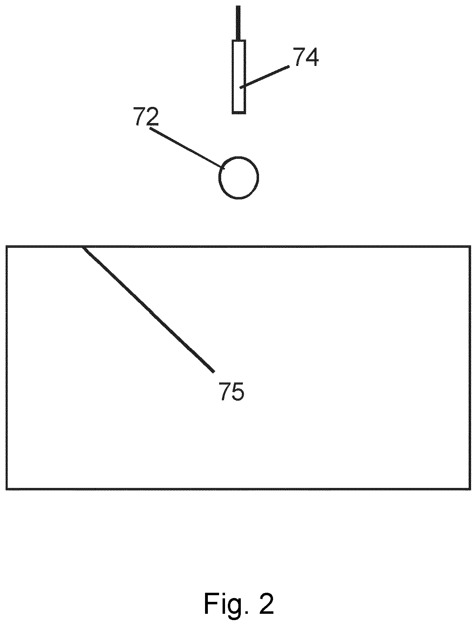

Im Folgenden wird in Verbindung mit den Figuren 1 und 2 das Messverfahren nach der Norm LV 312 aus Oktober 2009 ausführlich dargelegt.

Es zeigen
- Figur 1: den Aufbau der Messvorrichtung in der seitlichen Ansicht und
- Figur 2: denselben Aufbau in der horizontalen Ansicht.

Bei dieser Messmethode wird ein definierter Stahlstab 71 (Durchmesser 8 mm, Hebellänge von 220 mm) mit einem Prüfling 72 - sprich Klebeband - versehen und mit einer Kraft von 0,16 N aus einer Höhe von 20 mm, ausgelöst aus der Arretierung 73, auf ein Aluminiumblech 75 fallen gelassen. Das Aluminiumblech hat im unverformten Zustand die Masse 350 x 190 x 0,3 [mm] und wird halbtonnenförmig unter dem Prüfling 72 angeordnet, so dass sich eine Weite von 290 mm ergibt.

Das entstehende Geräusch wird mit einem sich 50 mm über der Aufschlagstelle befindlichen Mikrophon 74 und eines handelsüblichen Schallmessgerät, beispielsweise Typ 2239 der Firma Bruel & Kjaer, in Form des Schalldruckpegels (Lsp) mit der Frequenzbewertung A (Frequenzbereich von beispielsweise 20 bis 12.500 Hz) und der Zeitbewertung S (Slow) erfasst.

Die Dämpfung wird als Differenz zwischen Nullwert mit nicht-umwickeltem Stahlstab sowie dem jeweiligen Messwert in dB(A) angegeben.

Aufgabe der Erfindung ist es, gegenüber dem Stand der Technik eine merkliche Verbesserung zu erzielen und ein Klebeband bereitzustellen, das bei einer schraubenlinienförmigen Wicklung nicht mit dem ummantelten Untergrund verklebt, das mechanisch stabil ist und das einfach herzustellen ist.

Gelöst wird diese Aufgabe durch die Verwendung eines Klebebands, wie es im Hauptanspruch näher gekennzeichnet ist. In den Unteransprüchen sind vorteilhafte Ausführungsformen der Erfindung beschrieben.

Demgemäß betrifft die Erfindung die Verwendung eines Klebebands, bestehend aus einem Träger mit einer Oberseite und einer Unterseite, einer Klebeschicht und einer Abdeckung, wobei der Träger bezogen auf die Querrichtung eine Breite B_{T} aufweist, sowie aus einer auf der Unterseite des Trägers aufgebrachten Klebeschicht, wobei auf der offenen Seite der Klebeschicht eine flächenförmige Abdeckung mit einer in Querrichtung bezogenen Breite B_{A}, die größer oder gleich der Breite B_{T} ist, aufgebracht ist, und wobei die Abdeckung gegenüber dem Träger in Querrichtung einen Versatz mit einer Breite B_{VS} aufweist, wobei die Breite B_{VS} des Versatzes zwischen 0,4 * Breite B_{T} und 0,6 * Breite B_{T} liegt. Das Klebeband wird zum Ummanteln von langgestrecktem Gut verwendet, wobei das Klebeband in einer Schraubenlinie um das langgestreckte Gut geführt wird.

Der Teil der Oberseite der Abdeckung, der sich nicht unterhalb der Klebeschicht des Klebebands befindet, ist nicht mit einer klebenden Ausrüstung versehen.

Gemäß einer weiteren vorteilhaften Ausführungsform liegt das Verhältnis der Breite B_{T} zur Breite B_{A} zwischen 1,0 : 1,0 und 1,0 : 1,5, weiter vorzugsweise zwischen 1,0 : 1,0 und 1,0 : 1,3, besonders bevorzugt bei 1,0 : 1,0.

Die Breite Bvs des Versatzes liegt zwischen 0,4 * Breite B_{T} und 0,6 * Breite B_{T}, besonders vorzugsweise bei 0,5 * Breite B_{T}.

Eine ganz besonders vorteilhafte Variante des Klebebands ist dadurch gekennzeichnet, dass
a) das Verhältnis der Breite B_{T} zur Breite B_{A} bei 1,0 : 1,0 und
b) die Breite Bvs des Versatzes bei 0,5 * Breite B_{T} liegt.

In der Praxis haben sich die folgenden Werte für die Breite des Trägers und/oder Abdeckung als besonders vorteilhaft erwiesen:
- Träger: 15 mm bis 35 mm
- Abdeckung: 15 mm bis 52,5 mm

Des Weiteren sollte die minimale Überlappung B_{L} zwischen Träger und nichtklebender Abdeckung 5 mm betragen.

Als Trägermaterial und Abdeckung für das Klebeband können alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind. Dabei müssen Abdeckung und Trägermaterial nicht zwangsläufig aus den gleichen Materialien bestehen.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurch genadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.

Die durch die Partikelschicht hindurch genadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, eine erfindungsgemäße Abdeckung und einen erfindungsgemäßen Träger zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Besonders geeignet sind auch Nadelvliese. Bei diesen werden Fasern oder Faservliese durch mit Widerhaken versehene Nadeln in das Flor eingenadelt. Durch wechselndes Einstechen und Ausziehen der Nadeln wird das Material auf einem Nadelbalken verfestigt, wobei sich die Einzelfasern zu einem festen Flächengebilde verschlingen. Die Dauer dieses Vorganges entscheidet über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch die Abdeckung einen sehr geringen Foggingwert.

Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Es eignet sich auch eine Abdeckung, die aus Papier, aus einem Laminat, aus einer Folie (zum Beispiel PP, PE, PET, PA, PU), aus Schaumstoff oder aus einer geschäumten Folie besteht.

Die genannten Materialien lassen sich auch vorteilhaft als Trägermaterial für das Klebeband verwenden.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel und ähnlichem in den eigentlichen Kabelbereich und lassen sich über geeignete Auswahl des Werkstoffes den Anforderungen weitgehend anpassen. Mit Polyurethanen oder Copolymeren aus Polyolefinen lassen sich beispielsweise flexible und elastische Ummantelungen erzeugen, mit Polyester und Polyamiden werden sehr gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Gemäß einer weiteren bevorzugten Ausführungsform der Erfindung liegt das Flächengewicht des Trägers zwischen 30 g/m² und 180 g/m².

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine Acrylatschmelzhaftklebemasse, verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Das Auftragsgewicht bewegt vorzugsweise sich im Bereich zwischen 15 bis 200 g/m², weiter vorzugsweise 30 bis 120 g/m² (entspricht ungefähr einer Dicke von 15 bis 200 µm, weiter vorzugsweise 30 bis 120 µm).

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Der K-Wert (nach FIKENTSCHER) ist ein Maß für die durchschnittliche Molekülgröße hochpolymerer Stoffe. Die Bestimmung der Viskosität von Polymeren durch ein Kapillarviskosimeter erfolgt nach DIN EN ISO 1628-1:2009.

Zur Messung werden einprozentige (1 g/100 ml) toluolische Polymerlösungen bei 25 °C hergestellt und unter Verwendung des entsprechenden DIN-Ubbelohde-Viskosimeters nach ISO 3105:1994, Tabelle B.9 vermessen.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine Acrylatschmelzhaftklebemasse, wie sie unter der Bezeichnung acResin, insbesondere acResin A260, von der BASF geführt wird. Diese Klebemasse mit niedrigem K-Wert erhält ihre anwendungsgerechten Eigenschaften durch eine abschließende strahlenchemisch ausgelöste Vernetzung.

Die Klebemasse kann in Längsrichtung des Klebebands in Form eines Streifens aufgebracht sein, der eine geringere Breite aufweist als der Träger des Klebebands. Die Breite ist dabei so zu wählen, dass zum einen das Klebeband ausreichend haftet und zum anderen die Abdeckung ausreichend fixiert ist.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Möglich ist auch eine Transferierung der Klebemasse von einem anti-adhäsiven Trägertuch oder Releaseliner auf den Trägerverbund.

Ist eine Schwerentflammbarkeit des beschriebenen Klebebands erwünscht, lässt sich diese erzielen, indem dem Träger, der Abdeckung und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Das Klebeband wird zum Ummanteln von langgestrecktem Gut wie insbesondere Kabelsätzen eingesetzt, wobei das Klebeband in einer schraubenlinienförmigen Spirale um das langgestreckte Gut geführt wird.

Aufgrund der bevorzugten Ausführungsform des Klebebands, nämlich wenn die Breite B_{T} kleiner oder gleich der Breite B_{A} ist, wird bei einer schraubenlinienförmigen Umwicklung und dann, wenn darauf geachtet wird, dass die Abdeckung in der nächsten Wicklung immer an die Abdeckung der vorherigen Wicklung lückenlos anschließt, erreicht, dass kein Kontakt der Klebmasse mit dem zu ummantelnden Gut auftritt.

Ein Verhältnis Breite B_{T} zu Breite B_{A} von 1,0 : 0,8 hätte zur Folge, dass das Klebeband überlappend gewickelt werden muss, damit die aus den aneinanderlegenden Abdeckungen der einzelnen Wicklungen gebildete nichtklebende Schicht keine Lücken aufweist. Die Breite der Überlappung ist beim Wickeln nicht optisch zu kontrollieren, so dass die Variante, dass die Breite des Trägers B_{T} größer ist als die Breite der Abdeckung B_{A} eine mögliche, aber nicht besonders vorteilhafte Ausführungsform darstellt.

Die Vorteile der Verwendung des erfindungsgemäßen Klebebands sind vielfältig. Bei einer schraubenlinienförmigen Wicklung um einen Kabelbaum ergibt sich kein Kontakt der Klebmasse mit der Kabelisolierung. Der Kabelbaum behält somit eine sehr hohe Flexibilität, er kann leicht in die gewünschte Form gebogen werden.

Gleichzeitig sorgen die mehreren Lagen dafür, dass das Klebeband eine
- hohe Dämpfung
- hohe Abriebbeständigkeit
- hohe Temperaturbeständigkeit (zum Beispiel T4 nach LV 312, das heißt 3000 h bei einer Temperatur von 150 °C)
aufweist.

Durch die gezielte Kombination der Materialien des Trägers und der Abdeckung, beispielsweise die Kombination von Gewebe und Vlies kann eine sehr hohe Temperaturbeständigkeit erhalten werden, obwohl die Temperaturbeständigkeit der einzelnen Schichten deutlich darunter liegt, beispielsweise bei Vlies nur maximal T3 nach LV 312 und Ford-Spezifikation, das heißt 3000 h bei einer Temperatur von 125 °C.

Da das Klebeband nicht (über eine Klebemasse) mit dem Kabelbaum verbunden ist, erhöht sich die Abriebfestigkeit. Der aus dem Klebeband gebildete Schlauch kann leicht rutschen kann, so dass die Kraft zum Beispiel eines lokal begrenzten Dorns (scharfkantiges Blech) auf eine große, vergleichsweise glatte Fläche verteilt wird.

Durch die Ummantelung des bevorzugten Kabelbaums ist dieser hervorragend geschützt und gegen Erschütterungen gedämpft.

Durch seinen ursprünglich runden oder ovalen Querschnitt erleichtert der erfindungsgemäße Kabelbaum die störungsfreie Durchführung durch Bohrungen, Löcher, Öffnungen und dergleichen, ermöglicht anschließend eine leichte Verformbarkeit in andere Geometrien und Querschnitte, um sich so den örtlichen Gegebenheiten möglichst ideal anzupassen.

Die Wicklung in Schraubenlinienform ermöglicht an jeder Stelle des Kabelbaums eine einfache Durchmesseranpassung während der Wicklung. Ein Einschlagen des Kabelbaums ist nur für lange Strecken mit gleichbleibenden Durchmessern geeignet.

Ein weiterer Vorteil der geschilderten Art der Ummantelung besteht darin, dass beim Biegen des Kabelbaums Stauchungsfalten entstehen, die senkrecht dazu verlaufende Verklebungsnaht beim Einschlagen große Kräfte ausüben, die zu einem Aufplatzen der Ummantelung führen können. Bei der schraubenlinienförmigen Wicklung hingegen sind die einzelnen Verklebungsnähte fast parallel zu den Stauchungsfalten ausgerichtet und könne somit viel besser Kräfte aufnehmen.

Die Erfindung wird anhand einiger Beispiele näher erläutert, ohne mit diesen die Erfindung in irgendeiner Weise beschränken zu wollen.

Die Messungen finden dabei nach folgenden Normen statt:
- Flächengewichte der Gewebe und der Klebmassebeschichtung nach DIN EN ISO 2286-1
- Höchstzugkraft und Höchstzugkraftdehnung der Gewebe und Klebebänder in Längsrichtung nach DIN EN 14410 am Maximum der Reißdehnungskurve (Einspannlänge 100 mm, Zuggeschwindigkeit 300 mm/min)
- Klebkraft nach DIN EN 1939
- Dicke der Gewebe und Klebebänder nach DIN EN 1942
- Abriebfestigkeit nach LV 312
- Biegesteifigkeit nach DIN 53362

In den Beispielen sind der Träger des Klebebands sowie die Abdeckung ohne Versatz aufeinander laminiert zwecks Vereinfachung der Messung. Dieser Aufbau entspricht nicht dem Aufbau, wie er erfindungsgemäß beansprucht wird. Die Breite des Laminats liegt 50 mm (die Breite des Träger und der Abdeckung beträgt somit 50 mm).

Zwischen Träger und Abdeckung befindet sich eine acrylatbasierende Klebemasse mit 90 g/m² (acResin A 260).

| Beispiel | A | B | C | D | E |
|---|---|---|---|---|---|
| Klebeband | PET Gewebe-Tape (M1) | PET Gewebe-Tape orange (M2) | PET Gewebe-Tape (M1) | PET Gewebe-Tape (M1) | PET Gewebe-Tape (M1) |
| Abdeckung | Nadelvlies 120 g/m² (M4) | Nadelvlies 120 g/m² (M4) | Nadelvlies 57 g/m² (M5) | Wasserstrahlvlies 100 g/m² (M6) | PET-Folie 25 µm (M3) |
| Dämpfung LV 312 | **13,8** | **13,5** | **7,8** | **10,1** | **2,0** |
| Abrieb 5mm/7N LV 312 | **3795** | **3568** | **1882** | **3725** | **1265** |
| Dicke µm | **778** | **771** | **595** | **810** | **279** |
| Flächengewicht g/m² | **340** | **340** | **277** | **316** | **245** |
| Raumdichte kg/m³ | **437** | **441** | **465** | **390** | **879** |
| Temperaturklasse nach Ford ES-AC3T-1A303-AA | **4** | **4** | **4** | **4** | **4** |
| Schutz vor Flüssigkeitsdurchtritt | Nein | Nein | Nein | Nein | Ja |
| Kennzeichnung | Nein | Ja | Nein | Nein | Nein |

In der folgenden Tabelle sind die Eigenschaften der eingesetzten Träger beziehungsweise Abdeckungen untersucht und angegeben.

| Materialdaten | M1 | M2 | M3 | M4 | M5 | M6 |
|---|---|---|---|---|---|---|
| Klebeband | PET Gewebe-Tape | PET Gewebe-Tape orange | --- | --- | --- | --- |
| Abdeckung | -- | --- | PET-Folie 25 µm | Nadelvlies 120 g/m² | Nadelvlies 57 g/m² | Wasserstrahlvlies 100 g/m² |
| Dämpfung LV 312 | **2,0** | **2,0** | **0,1** | **8,7** | **7,4** | **9,5** |
| Abrieb 5 mm / 7N LV 312 | **1738** | **1678** | **182** | **94** | **18** | **94** |
| Dicke µm | **259** | **251** | **133** | **668** | **361** | **552** |
| Flächengewicht g/m² | **220** | **220** | **93** | **120** | **57** | **96** |
| Raumdichte kg/m³ | **851** | **875** | **698** | **180** | **158** | **174** |
| Temperaturklasse nach Ford ES-AC3T-1A303-AA | **4** | **4** | **3** | **3** | **3** | **3** |
| Schutz vor Flüssigkeitsdurchtritt | Nein | Nein | Ja | Nein | Nein | Nein |
| Kennzeichnung | Nein | Nein | Nein | Nein | Nein | Nein |

Im Folgenden soll das Klebeband mittels mehrerer Figuren gezeigt werden, ohne auch hierin eine wie auch immer geartete Einschränkung hervorrufen zu wollen.

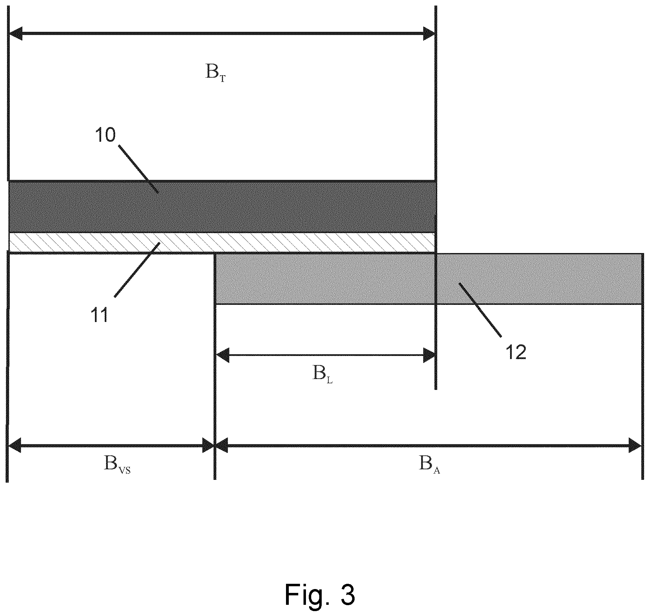

Es zeigen
- Figur 3: das Klebeband im seitlichen Schnitt,

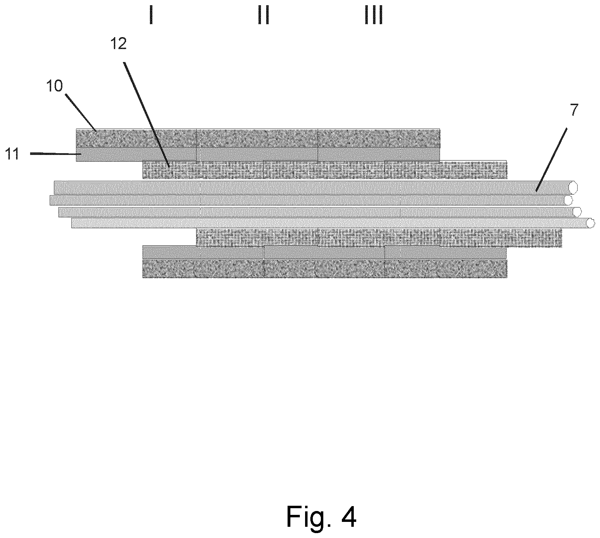

- Figur 4: einen Ausschnitt eines Kabelbaums, der sich aus einer Bündelung von einzelnen Kabeln zusammensetzt und der mit dem erfindungsgemäßen Klebeband ummantelt ist.

In der Figur 3 ist im seitlichen Schnitt das Klebeband gezeigt, das aus einem Vlies-Nähwirkträger 10 mit einer Breite B_{T} besteht, auf den unterseitig eine Schicht einer selbstklebenden Beschichtung 11 aufgebracht ist.

Auf der offenen Seite der Klebeschicht 11 ist eine flächenförmige Abdeckung 12 mit einer in Querrichtung bezogenen Breite B_{A}, die gleich der Breite B_{T} ist, aufgebracht.

Die Abdeckung 12 ist gegenüber dem Träger 10 in Querrichtung mit einem Versatz aufgebracht, der der Breite B_{VS} entspricht. Die Breite B_{VS} entspricht 0,5 * der Breite B_{T}.

In der Figur 4 ist ein Ausschnitt eines Kabelbaums gezeigt, der sich aus einer Bündelung von einzelnen Kabeln 7 zusammensetzt und der mit dem erfindungsgemäßen Klebeband ummantelt ist. Das Klebeband wird von links kommend nach rechts in einer schraubenförmigen Bewegung um den Kabelbaum geführt.

Der gezeigte Ausschnitt des Kabelbaums zeigt drei Wicklungen I, II und III des Klebebands. Nach links hin würden sich weitere Wicklungen erstrecken, diese sind hier nicht dargestellt.

Der Aufbau des Klebebands entspricht demjenigen aus der Figur 3.

Die Ummantelung des Kabelbaums erfolgt derartig, dass die Klebeschicht 11 vollständig auf der Abdeckung 12 des Klebebandabschnitts der vorherigen Wicklung verklebt.

Eine Verklebung der Klebemassenschicht 11 mit den Kabeln 7 ist ausgeschlossen.

## Patentansprüche

1. Verwendung eines Klebebandes bestehend aus einem Träger mit einer Oberseite und einer Unterseite, einer Klebeschicht und einer Abdeckung, wobei der Träger bezogen auf die Querrichtung eine Breite B_{T} aufweist, sowie aus einer auf der Unterseite des Trägers aufgebrachten Klebeschicht,
wobei auf der offenen Seite der Klebeschicht eine flächenförmige Abdeckung mit einer in Querrichtung bezogenen Breite B_{A}, die größer oder gleich der Breite B_{T} ist, aufgebracht ist,
wobei die Abdeckung gegenüber dem Träger in Querrichtung einen Versatz mit einer Breite Bvs aufweist,
wobei die Breite Bvs des Versatzes zwischen 0,4 * Breite B_{T} und 0,6 * Breite B_{T} liegt, wobei der Teil der Oberseite der Abdeckung, der sich nicht unterhalb der Klebeschicht des Klebebands befindet, nicht mit einer klebenden Ausrüstung versehen ist,
zum Ummanteln von langgestrecktem Gut, wobei das Klebeband in einer Schraubenlinie um das langgestreckte Gut geführt wird.

2. Verwendung nach Anspruch 1,
**dadurch gekennzeichnet, dass**
das Verhältnis der Breite B_{T} zur Breite B_{A} zwischen 1,0 : 1,0 und 1,0 : 1,5 liegt, vorzugsweise zwischen 1,0 : 1,0 und 1,0 : 1,3, besonders bevorzugt bei 1,0 : 1,0.

3. Verwendung nach Anspruch 1 oder 2,
**dadurch gekennzeichnet, dass**
die Breite B_{VS} des Versatzes bei 0,5 * Breite B_{T} liegt.

4. Verwendung nach zumindest einem der Ansprüche 1 bis 3,
**dadurch gekennzeichnet, dass**
a) das Verhältnis der Breite B_{T} zur Breite B_{A} bei 1,0 : 1,0 und
b) die Breite Bvs des Versatzes bei 0,5 * Breite B_{T} liegt.

5. Verwendung nach zumindest einem der vorherigen Ansprüche,
**dadurch gekennzeichnet, dass**
es sich bei der Kleberbeschichtung um eine Klebmasse auf Basis Naturkautschuk, Synthesekautschuk, Acrylat, vorzugsweise eine Acrylatschmelzhaftklebemasse, oder Silikon handelt.

## Claims

1. Use of an adhesive tape consisting of a carrier having a top face and a bottom face, an adhesive layer and a liner, the carrier having a width B_{T} based on the transverse direction, and also of an adhesive layer applied on the bottom face of the carrier,
there being
applied on the open side of the adhesive layer a sheetlike liner having a transverse-direction-based width B_{A}, which is greater than or equal to the width B_{T},
the liner having an offset relative to the carrier in transverse direction, with a width B_{VS},
where the width B_{VS} of the offset lies between 0.4 * width B_{T} and 0.6 * width B_{T},
where the part of the top face of the liner which is not located below the adhesive layer of the adhesive tape is not provided with adhesive furnishing,
for jacketing elongate material, the adhesive tape being passed in a helical line around the elongate material.

2. Use according to Claim 1,
**characterized in that**
the ratio of the width B_{T} to the width B_{A} lies between 1.0 : 1.0 and 1.0 : 1.5, preferably between 1.0 : 1.0 and 1.0 : 1.3, more preferably at 1.0 : 1.0.

3. Use according to Claim 1 or 2,
**characterized in that**
the width B_{VS} of the offset lies at 0.5 * width B_{T}.

4. Use according to at least one of Claims 1 to 3, **characterized in that**
the ratio of the width B_{T} to the width B_{A} lies at 1.0 : 1.0 and
the width B_{VS} of the offset lies at 0.5 * width B_{T}.

5. Use according to at least one of the preceding claims,
**characterized in that**
the coating of adhesive comprises an adhesive based on natural rubber, synthetic rubber, acrylate, preferably a pressure-sensitive acrylate hotmelt adhesive, or silicone.

## Revendications

1. Utilisation d'une bande adhésive constituée par un support comprenant un côté supérieur et un côté inférieur, une couche adhésive et un recouvrement, le support présentant une largeur B_{T} dans la direction transversale, ainsi qu'une couche adhésive appliquée sur le côté inférieur du support,
un recouvrement de forme plate ayant une largeur B_{A} dans la direction transversale qui est supérieure ou égale à la largeur B_{T} étant appliqué sur le côté libre de la couche adhésive,
le recouvrement présentant un décalage d'une largeur B_{VS} dans la direction transversale par rapport au support, la largeur B_{VS} du décalage étant comprise entre 0,4 * la largeur B_{T} et 0,6 * la largeur B_{T}, la partie du côté supérieur du recouvrement qui ne se trouve pas en dessous de la couche adhésive de la bande adhésive n'étant pas munie d'un traitement adhésif,
pour l'enrobage d'un article étiré en longueur, la bande adhésive étant acheminée autour de l'article étendu en longueur en une hélice.

2. Utilisation selon la revendication 1, **caractérisée en ce que** le rapport entre la largeur B_{T} et la largeur B_{A} est compris entre 1,0:1,0 et 1,0:1,5, de préférence entre 1,0:1,0 et 1,0:1,3, de manière particulièrement préférée est de 1,0:1,0.

3. Utilisation selon la revendication 1 ou 2, **caractérisée en ce que** la largeur B_{VS} du décalage est de 0,5 * la largeur B_{T}.

4. Utilisation selon au moins l'une quelconque des revendications 1 à 3, **caractérisée en ce que**
a) le rapport entre la largeur B_{T} et la largeur B_{A} est de 1,0:1,0, et
b) la largeur B_{VS} du décalage est de 0,5 * la largeur B_{T}.

5. Utilisation selon au moins l'une quelconque des revendications précédentes, **caractérisée en ce que** le revêtement adhésif consiste en une masse adhésive à base de caoutchouc naturel, de caoutchouc de synthèse, d'acrylate, de préférence une masse adhésive de contact fusible à base d'acrylate, ou de silicone.
